# FASCICULE DE BREVET EUROPEEN

(11) **EP 3 921 230 B1**
(45) Date de publication et mention de la délivrance du brevet: **25.10.2023**
(21) Numéro de dépôt: 20709270.1
(22) Date de dépôt: 04.02.2020
(51) Int. Cl.: B64C 1/32

(54) **SYSTÈME D'ÉJECTION POUR UNE ISSUE DE SECOURS D'UN VÉHICULE**
AUSWURFSYSTEM FÜR EINEN NOTAUSSTIEG EINES FAHRZEUGS
EJECTION SYSTEM FOR AN EMERGENCY EXIT OF A VEHICLE

(30) Priorité: 06.02.2019 FR 1901157
(43) Date de publication de la demande: 15.12.2021
(73) Titulaire: Vision Systems, 69530 Brignais (FR)
(72) Inventeur: BENENTENDI, Philippe, 69630 CHAPONOST (FR); SIMON, Mathieu, 69300 CALUIRE (FR)
(74) Mandataire: Germain Maureau
(86) Numéro de dépôt international: PCT/FR2020/050180
(87) Numéro de publication internationale: WO 2020/161428

(56) Documents cités:
- EP-A1- 3 100 947
- EP-A2- 1 048 562
- US-A1- 2009 014 587
- US-A1- 2014 259 935
- US-B1- 6 427 383

## Description

### Domaine de l'invention

La présente invention concerne un système d'éjection pour une issue de secours d'un véhicule.

### Art antérieur

Il est connu de disposer d'un véhicule avec une issue de secours apte à être éjectée vers l'extérieur du véhicule. EP3100947 A1 divulgue une sortie de secours éjectable pour utilisation dans un hélicoptère, ayant une unité de rétention de sortie comprenant un doigt pivotant dans lequel la sortie est rotative en mode d'urgence, où le crochet de verrouillage est rétractable du verrouillage en position rétractée de la sangle d'activation de la sortie. US6427383 B1 divulgue un système de sortie de secours pour avion ou autre véhicule. EP1048562 A2 divulgue un système de sortie de secours destiné à être utilisé principalement dans un hélicoptère ou un autre aéronef, comporte des barres d'appui dont l'actionnement entraîne la libération simultanée de tous les verrous du panneau de fermeture. US2014259935 A1 divulgue un aéronef avec un mécanisme de largage comportant un bouton d'urgence frontal qui fait partie intégrante de la poignée frontale et qui peut être déplacé par rapport à la poignée pour larguer la porte de l'aéronef en coupant toutes les connexions de la porte à la cellule. US2009014587 A1 concerne un système de sécurité pour aéronefs divulguant un avion de passagers modifié qui est divisé en une partie supérieure pilotable et une partie inférieure largable, dans laquelle la partie inférieure largable est configurée pour être désengagée de la partie supérieure pilotable en cas de situation d'urgence.

Dans le cas d'un hélicoptère, l'issue de secours peut être une fenêtre comprenant une vitre qui peut être désolidarisée d'un cadre d'accueil du véhicule en cas d'urgence.

L'issue de secours est éjectée vers l'extérieur du véhicule dans le but de permettre à un occupant de sortir du véhicule. Ainsi, il est nécessaire d'utiliser un système d'éjection apte à fonctionner indépendamment des autres fonctions du véhicule.

Des systèmes d'éjection mécaniques comprenant une poignée d'actionnement existent et donnent satisfaction puisqu'aucune source d'énergie électrique n'est nécessaire au fonctionnement de ces systèmes d'éjection.

Ces systèmes d'éjection sont également utilisés pour réaliser la fixation de l'issue de secours dans le cadre d'accueil. Ils donnent satisfaction en ce qu'ils fixent l'issue de secours au cadre d'accueil tout en permettant une éjection rapide.

Toutefois, ces systèmes d'éjection mécaniques peuvent s'avérer volumineux notamment en s'étendant parallèlement à la surface d'extension de l'issue de secours à l'intérieur du cadre d'accueil et/ou de l'issue de secours.

La présente invention vise à résoudre tout ou partie des inconvénients mentionnés ci-dessus.

### Exposé de l'invention

A cet effet, la présente invention concerne un système d'éjection pour une issue de secours d'un véhicule, l'issue de secours s'étendant selon une surface de base et étant agencée pour coopérer en une position montée avec un cadre d'accueil du véhicule, le système d'éjection comprenant un élément de retenue et un mécanisme de blocage agencé pour coopérer avec l'élément de retenue selon une configuration de blocage dans laquelle une partie mobile du mécanisme de blocage empêche un déplacement relatif de l'élément de retenue et du mécanisme de blocage selon une direction d'éjection de l'issue de secours qui est transversale à la surface de base, la partie mobile étant configurée pour être déplacée dans un plan de fermeture s'étendant transversalement à la surface de base et une configuration d'éjection dans laquelle le mécanisme de blocage est apte à se déplacer selon la direction d'éjection par rapport à l'élément de retenue.

La partie mobile se déplaçant transversalement au plan de base, le système d'éjection présente un encombrement réduit selon la surface de base, c'est-à-dire transversalement à la direction d'éjection.

En d'autres termes, les mouvements de la partie mobile sont situés dans l'épaisseur de l'issue de secours ou du cadre d'accueil, soit sensiblement parallèlement à la direction d'éjection.

Cette disposition permet donc d'intégrer facilement le mécanisme de blocage sur un rebord de l'issue de secours ou dans le cadre d'accueil.

Selon un exemple illustratif non couvert par les revendications annexées, un ensemble de secours comprend le système d'éjection, le cadre d'accueil et l'issue de secours. Le véhicule peut ainsi comprendre un ou plusieurs ensembles de secours.

Selon un exemple illustratif non couvert par les revendications annexées, le véhicule est un véhicule ferroviaire, un véhicule motorisé de type de camping-car ou un aéronef, de préférence un hélicoptère. De préférence, l'issue de secours est une portière et/ou une fenêtre et comprenant en particulier une vitre.

Selon un aspect de l'invention, la partie mobile comprend une mâchoire configurée pour pivoter autour d'un axe de fermeture qui est transversal au plan de fermeture.

Cette disposition permet un passage aisé de la configuration d'éjection à la configuration de blocage lors de la mise en place de l'issue de secours sur le véhicule. En effet, un jeu suffisant existe entre la mâchoire et l'élément de retenue pour permettre un bon positionnement relatif de ces deux pièces. Un alignement parfait n'est ainsi pas nécessaire.

Selon un exemple illustratif non couvert par les revendications annexées, le mécanisme de blocage présente en configuration d'éjection une ouverture traversante s'étendant partiellement transversalement à l'axe de fermeture et partiellement transversalement à la direction d'éjection.

Cette disposition permet un passage aisé de la position démontée à la position montée puisque l'ouverture s'étend selon deux dimensions sensiblement orthogonales.

De préférence, l'ouverture traversante est ménagée dans une paroi transversale à l'axe de fermeture et une autre paroi partiellement transversale à la direction d'éjection.

Selon un exemple illustratif non couvert par les revendications annexées, l'élément de retenue comprend une tige s'étendant sensiblement parallèlement à l'axe de fermeture, la tige étant apte à coopérer avec la mâchoire. De préférence, la tige est bloquée par la mâchoire selon la direction d'éjection en configuration de blocage.

Selon un exemple illustratif non couvert par les revendications annexées, lorsque l'issue de secours est en position démontée et le mécanisme de blocage en configuration de blocage, l'élément de retenue est configuré pour coopérer avec la partie mobile de manière à disposer la partie mobile en configuration d'éjection.

En d'autres termes, il est possible de monter l'issue de secours au cadre même si le mécanisme de blocage est en configuration de blocage. Cette disposition facilite la mise en place de l'issue de secours dans le cadre.

Selon un exemple illustratif non couvert par les revendications annexées, la partie mobile comprend une mâchoire additionnelle configurée pour pivoter autour d'un axe de fermeture additionnel. De préférence, la mâchoire et la mâchoire additionnelle sont agencées pour entourer au moins une partie de l'élément de retenue. En particulier, la mâchoire coopère avec la mâchoire additionnelle de sorte que la mâchoire entraine la mâchoire additionnelle en rotation.

Selon un exemple illustratif non couvert par les revendications annexées, le sens de rotation de la mâchoire est opposé au sens de rotation de la mâchoire additionnelle.

De préférence, la mâchoire présente une première partie d'engrenage agencée pour coopérer avec une deuxième partie d'engrenage de la mâchoire additionnelle. En particulier, l'axe de fermeture et l'axe de fermeture additionnel sont distants.

Selon un aspect de l'invention, la partie mobile présente une butée d'actionnement configurée pour coopérer avec l'élément de retenue lors d'un déplacement de l'issue de secours d'une position démontée à la position montée de sorte à passer de la configuration d'éjection à la configuration de blocage lorsque la position montée est atteinte.

Cette disposition permet un passage automatique en configuration de blocage lorsque l'issue de secours est installée sur le cadre d'accueil.

De préférence, la butée d'actionnement est rapportée sur ou ménagée dans la mâchoire. En particulier, lors du passage de la position démontée à la position montée, la tige coopère avec la mâchoire de sorte à faire pivoter la mâchoire jusqu'à la configuration de blocage.

Cette disposition permet de limiter le nombre de pièces utilisées dans le sens où il n'est pas nécessaire de disposer d'une pièce additionnelle pour déplacer la mâchoire de la configuration d'éjection à la configuration de blocage.

Selon un aspect de l'invention, la butée d'actionnement est agencée pour coopérer avec l'élément de retenue lors d'un passage de la configuration de blocage à la configuration d'éjection de sorte à entraîner un déplacement relatif de l'élément de retenue selon la direction d'éjection.

La butée d'actionnement a également pour fonction de déplacer le mécanisme de blocage relativement à l'élément de retenue lors de l'éjection de l'issue de secours.

Ainsi, lorsque l'issue de secours doit être éjectée du cadre d'accueil, le passage de la configuration de blocage à la configuration d'éjection permet de déplacer légèrement la fenêtre vers la position démontée de sorte que l'utilisateur n'a plus qu'à pousser l'issue de secours selon la direction d'éjection pour passer en position démontée.

Selon un aspect de l'invention, le mécanisme de blocage comprend un verrou configuré pour coopérer avec la partie mobile en une position verrouillée dans laquelle la partie mobile est maintenue en configuration de blocage.

Cette disposition permet d'éviter tout passage non désiré de la configuration de blocage à la configuration d'éjection. Grâce au verrou, un utilisateur appuyant sur l'issue de secours dans la direction d'éjection ne provoque pas le passage en position démontée.

Selon un aspect de l'invention, le mécanisme de blocage comprend un dispositif de verrouillage agencé pour disposer le verrou en position verrouillée lorsque le mécanisme de blocage est en configuration de blocage.

Cette disposition permet la sécurisation de l'issue de secours sur le cadre d'accueil. Une fois disposée en position montée, la configuration de blocage est facilement verrouillée grâce au dispositif de verrouillage.

Selon un aspect de l'invention, le dispositif de verrouillage comprend un indicateur visuel configuré pour signaler le bon positionnement du verrou en position verrouillée.

Cette disposition permet de s'assurer par un contrôle visuel qu'il n'y a pas de risque d'éjection non désiré de l'issue de secours. De préférence l'indicateur visuel est une surface colorée.

Selon un aspect de l'invention, le dispositif de verrouillage comprend un actionneur rotatif configuré pour coopérer avec le verrou, l'actionneur rotatif étant solidaire de l'indicateur visuel.

L'indicateur visuel est ainsi fiable puisque sa position dépend de l'état de l'actionneur rotatif. La fiabilité de l'indicateur visuel est ainsi augmentée.

De préférence, l'actionneur rotatif comprend un emplacement d'accueil d'un outil de configuré pour entraîner la rotation. De préférence, l'emplacement d'accueil correspond à une clé hexagonale.

Cette disposition permet d'avoir un dispositif de verrouillage de faible encombrement et notamment sans levier.

Selon un exemple illustratif non couvert par les revendications annexées, le verrou présente une surface d'entrainement configurée pour coopérer avec la partie mobile lors d'un passage de la position verrouillée à une position déverrouillée de sorte à faire passer la partie mobile de la configuration de blocage à la configuration d'éjection.

Cette disposition permet le déclenchement de l'éjection de l'issue de secours en déplaçant seulement le verrou. En effet, le déplacement du verrou a un premier effet qui est de passer de la position verrouillée à la position déverrouillée.

Le surface d'entrainement permet en outre de déplacer par la même occasion la partie mobile dans le but de passer de la configuration de blocage à la configuration d'éjection.

Selon un exemple illustratif non couvert par les revendications annexées, le mécanisme de blocage présente un rail agencé pour guider le verrou entre la position verrouillée et la position déverrouillée et inversement. Cette disposition permet de sécuriser le déplacement du verrou, ce qui améliore la fiabilité du système d'éjection.

Selon un exemple illustratif non couvert par les revendications annexées, le verrou est configuré pour être disposé dans une position intermédiaire entre la position déverrouillée et la position verrouillée, la position intermédiaire résultant de la disposition de l'issue de secours de la position démontée à la position montée.

Ainsi, lors de la mise en place de l'issue de secours, il est nécessaire de déplacer le verrou de la position intermédiaire vers la position verrouillée.

Cette disposition permet ainsi un montage aisé et fiable de l'issue de secours puisque l'utilisateur doit s'assurer par lui-même que l'on est bien en position verrouillée après avoir monté l'issue de secours dans le cadre d'accueil.

Selon un exemple illustratif non couvert par les revendications annexées, la partie mobile présente une avancée agencée pour coopérer d'une part avec une surface de verrouillage du verrou en position verrouillée et avec la surface d'entrainement lors du déverrouillage.

L'avancée permet donc d'assurer deux fonctions : le verrouillage et le passage en configuration d'éjection.

Le verrou présente une encoche dans laquelle l'avancée est insérée. La surface d'entrainement et la surface de verrouillage sont ménagées en regard l'une de l'autre de chaque côté de l'encoche.

Selon un aspect de l'invention, l'élément de retenue est configuré pour être rapporté sur ou ménagé dans le cadre d'accueil et dans lequel le mécanisme de blocage est configuré pour être rapporté sur ou ménagé dans l'issue de secours.

Cette disposition permet de concevoir un système d'éjection presque entièrement apte à être intégré dans un rebord de l'issue de secours puisque seul l'élément de retenue est sur le cadre d'accueil.

Par ailleurs, le système d'éjection s'étend dans l'épaisseur de l'issue de secours de par sa conception, ce qui permet de limiter l'extension du rebord selon la surface de base.

Selon un exemple illustratif non couvert par les revendications annexées, le mécanisme de blocage est configuré pour être rapporté sur ou ménagé dans le cadre d'accueil et dans lequel l'élément de retenue est configuré pour être rapporté sur ou ménagé dans l'issue de secours.

Selon les contraintes géométriques il est également possible de prévoir d'intégrer le mécanisme de blocage dans le cadre d'accueil.

Selon un aspect de l'invention, le système d'éjection comprend une pluralité d'éléments de retenue et une pluralité de mécanismes de blocage correspondants, le système d'éjection comprenant en outre un dispositif de déclenchement agencé pour réaliser le passage de la configuration de blocage à la configuration d'éjection de la pluralité de mécanismes de blocage.

Cette disposition permet au système d'éjection de réaliser le maintien en position de l'issue de secours dans le cadre d'accueil. Aucun autre système de fixation au cadre d'accueil n'est nécessaire pour l'issue de secours.

De plus, le dispositif de déclenchement permet de disposer en une seule opération la pluralité de mécanismes de blocage en configuration d'éjection.

Selon un exemple illustratif non couvert par les revendications annexées, lorsqu'au moins un mécanisme de blocage comprend un verrou tel que décrit ci-avant, le dispositif de déclenchement est agencé pour déplacer ledit verrou de la position verrouillée à la position déverrouillée.

Selon un exemple illustratif non couvert par les revendications annexées, lorsque chaque mécanisme de blocage comprend un verrou correspondant, le dispositif de déclenchement est agencé pour déplacer chaque verrou de la position verrouillée à la position déverrouillée.

Ainsi, l'utilisation de verrous n'empêche pas le dispositif de déclenchement de fonctionner.

Selon un aspect de l'invention, le dispositif de déclenchement comprend un ou des câbles, un mécanisme de mise sous tension du ou des câbles agencé pour déclencher le passage de la configuration de blocage à la configuration d'éjection lors de la mise sous tension, et, au moins une poignée d'actionnement.

En d'autres termes, le déclenchement est mécanique, la mise sous tension correspondant au fait de tendre le ou les câbles. Par câble, il est entendu un fil ou une corde apte à être tendue.

Cette disposition permet un actionnement simple du dispositif de déclenchement par une mise sous tension du ou des câbles en tirant sur la poignée d'actionnement.

Selon un exemple illustratif non couvert par les revendications annexées, le mécanisme de mise sous tension comprend une poulie configurée pour permettre la mise sous tension du ou des câbles lorsqu'un utilisateur tire sur la poignée d'actionnement.

Cette disposition permet de tirer la poignée d'actionnement dans n'importe quelle direction car la poulie permet tendre le ou les câbles dans tous les cas de figure.

Selon un exemple illustratif non couvert par les revendications annexées, le mécanisme de mise sous tension comprend une pièce de liaison rotative reliée à la poulie de manière à permettre la tension d'au moins deux câbles, chacun des au moins deux câbles étant relié à une extrémité de la pièce de liaison rotative.

Cette disposition permet de tendre les au moins deux câbles en tirant dessus selon deux directions opposées. Le mécanisme de mise sous tension permet ainsi de s'adapter à différents types de configurations spatiales entre les mécanismes de blocage.

Selon un exemple illustratif non couvert par les revendications annexées, le ou les câbles sont agencés pour coopérer avec les mécanismes de blocage de la pluralité de mécanismes de blocage de sorte à déplacer les parties mobiles de la pluralité des mécanismes de blocage.

Selon un exemple illustratif non couvert par les revendications annexées, le ou les câbles sont agencés pour être raccordés à un ou des verrous de mécanismes de blocage correspondants. De préférence, le passage de la configuration de blocage à la configuration d'éjection des mécanismes de blocage est réalisé par la disposition des verrous de la position verrouillée à la position déverrouillée par le ou les câbles.

Selon un exemple illustratif non couvert par les revendications annexées, l'éjection de l'issue de secours se produit vers l'extérieur du véhicule selon la direction d'éjection. De préférence, la ou les poignées d'actionnement sont disposées du côté intérieur et/ou du côté extérieur du véhicule.

Les différents aspects définis ci-dessus non incompatibles peuvent être combinés dans la mesure où ils entrent dans le champ d'application des revendications annexées.

### Brève description des figures

L'invention sera mieux comprise à l'aide de la description détaillée qui est exposée ci-dessous en regard des dessins annexés.
[Fig. 1] est une vue en perspective d'une partie d'un véhicule comprenant une issue de secours et un cadre d'accueil.
[Fig. 2] est une vue en perspective d'un mécanisme de blocage d'un système d'éjection.
[Fig. 3] est une vue en perspective du système d'éjection.
[Fig. 4] est une vue en perspective du système d'éjection.
[Fig. 5] est une vue en perspective d'un dispositif de verrouillage du mécanisme de blocage.
[Fig. 6] est une vue de dessus du système d'éjection en une configuration d'éjection.
[Fig. 7] est une vue de dessus du système d'éjection en une configuration de blocage.
[Fig. 8] est une vue en perspective de détail du système d'éjection.
[Fig. 9] est une vue schématique d'un dispositif de déclenchement du système d'éjection.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

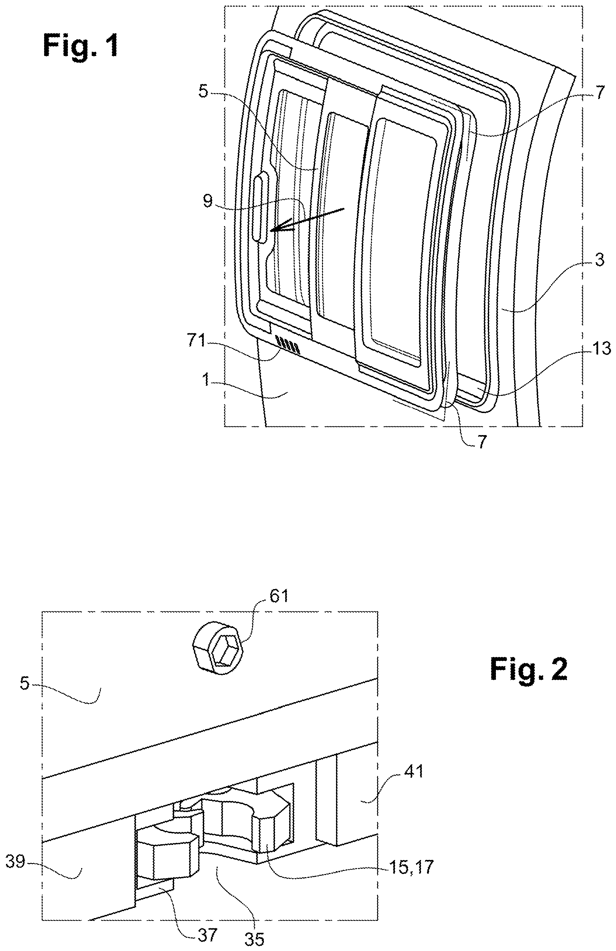

Comme illustré à la figure 1, un véhicule 1 comprend un cadre d'accueil 3 et une issue de secours 5 configurée pour coopérer avec le cadre d'accueil 3 en une position montée.

Le véhicule 1 est ici un aéronef et plus particulièrement un hélicoptère. L'issue de secours 5 peut être une portière ou une fenêtre comprenant une vitre comme illustré à la figure 1.

L'issue de secours 5 s'étend selon une surface de base 7 qui peut être sensiblement plane et par exemple légèrement recourbée.

L'issue de secours 5 est configurée pour être éjectée du cadre d'accueil 3 vers l'extérieur du véhicule selon une direction d'éjection 9, la surface de base 7 étant transversale à la direction d'éjection 9.

Comme illustré aux figures 2 à 8, un système d'éjection 11 est agencé pour déplacer l'issue de secours 5 relativement au cadre d'accueil 3 d'une position montée à une position démontée.

Le système d'éjection 11 est également configuré pour permettre un passage de la position démontée à la position montée lors de la mise en place de l'issue de secours 5 sur le véhicule 1.

Le système d'éjection 11 comprend un élément de retenue 13 rapporté sur le cadre d'accueil 3 et un mécanisme de blocage 15 correspondant ménagé dans l'issue de secours 5.

Alternativement, il est également possible de prévoir un élément de retenue 13 rapporté sur l'issue de secours 5 et un mécanisme de blocage 15 ménagé dans le cadre d'accueil 3.

Un ensemble de secours comprend le système d'éjection 11, le cadre d'accueil 3 et l'issue de secours 5. Le véhicule 1 peut ainsi comprendre un ou plusieurs ensembles de secours.

Le mécanisme de blocage 15 comprend une partie mobile 17 configurée pour être déplacée dans un plan de fermeture 19 s'étendant transversalement à la surface de base 7.

La partie mobile 17 comprend une mâchoire 21 configurée pour pivoter autour d'un axe de fermeture 23, le plan de fermeture 19 étant transversale à l'axe de fermeture 23.

La partie mobile 17 comprend en outre une mâchoire additionnelle 25 configurée pour pivoter autour d'un axe de fermeture additionnel 27 parallèle à l'axe de fermeture 23.

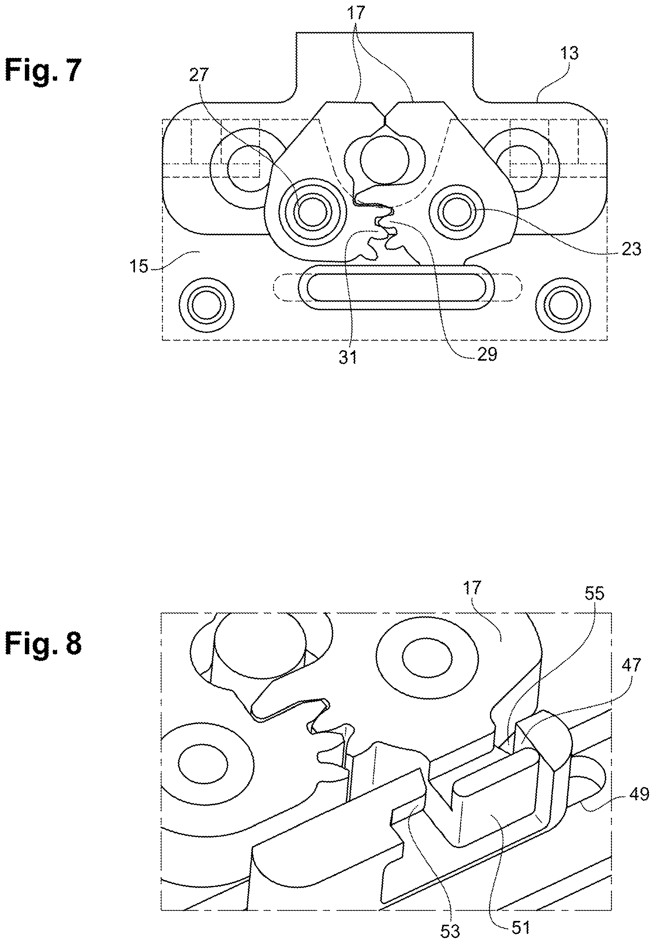

La mâchoire 21 et la mâchoire additionnelle 25 sont agencées pour entourer au moins une partie de l'élément de retenue 13 en une configuration de blocage comme illustré à la figure 7.

Ainsi, en configuration de blocage, la partie mobile 17 empêche le déplacement relatif de l'élément de retenue 13 et du mécanisme de blocage 15 selon la direction d'éjection 9.

La mâchoire 21 coopère avec la mâchoire additionnelle 25 de sorte que la mâchoire 21 entraine la mâchoire additionnelle 25 en rotation. Le sens de rotation de la mâchoire 21 est opposé au sens de rotation de la mâchoire additionnelle 25.

La mâchoire 21 présente une première partie d'engrenage 29 agencée pour coopérer avec une deuxième partie d'engrenage 31 de la mâchoire additionnelle 25.

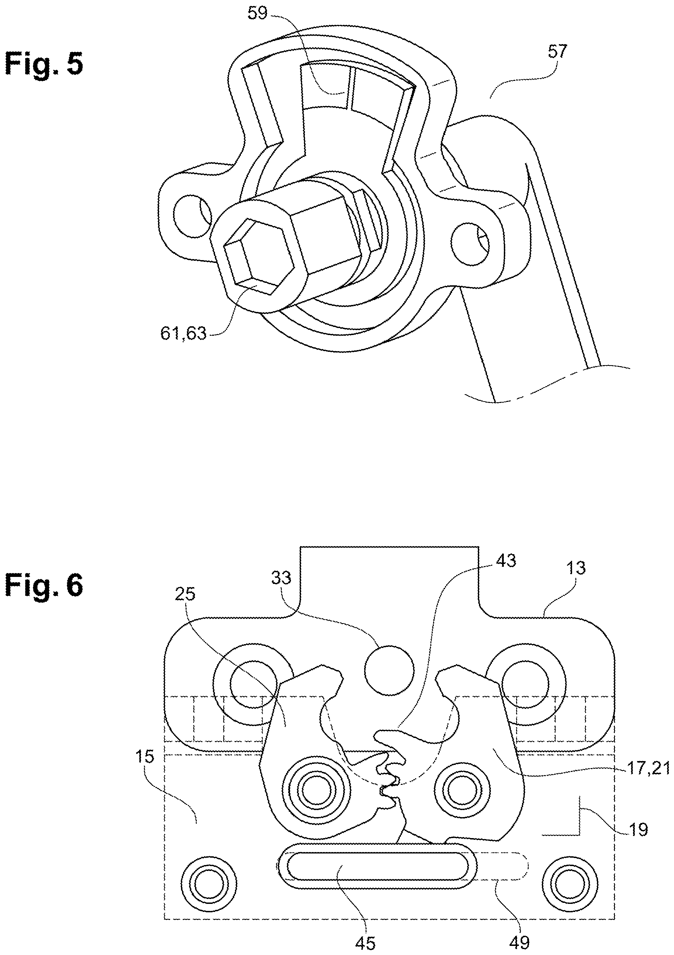

Comme illustré à la figure 6, l'élément de retenue 13 et le mécanisme de blocage 15 peuvent également être coopérer selon une configuration d'éjection dans laquelle l'élément de retenue 13 est apte à se déplacer selon la direction d'éjection 9.

Il est à remarquer que la partie mobile 17 peut être disposée en configuration d'éjection par l'élément de retenue 13 lors de l'installation de l'issue de secours 5 dans le cadre d'accueil 3 lorsque la mâchoire 21 et la mâchoire additionnelle 25 sont refermées.

En effet, l'élément de retenue 13 comprend une tige 33 s'étendant sensiblement parallèlement à l'axe de fermeture 23 et permettant d'ouvrir la mâchoire 21 et la mâchoire additionnelle 25.

Comme illustré à la figure 2, le mécanisme de blocage 15 présente une ouverture traversante 35 ménagée dans une paroi 37 qui est transversale à l'axe de fermeture 23 et dans une autre paroi 39 qui est transversale à la direction d'éjection 9.

La paroi 37 et l'autre paroi 39 sont ménagées dans un rebord 41 de l'issue de secours 5.

L'ouverture traversante 35 est ainsi transversale à l'axe de fermeture 23 et à la direction d'éjection 9 pour autoriser un léger jeu dans la coopération entre l'élément de retenue 13 et le mécanisme de blocage 15 pour une installation et une éjection faciles.

Comme illustré aux figures 6 et 7, la partie mobile 17 présente une butée d'actionnement 43 ménagée dans la mâchoire 21. La butée d'actionnement 43 a deux rôles.

Un premier rôle consiste, pour la butée d'actionnement 43, à coopérer avec l'élément de retenue 13 lors d'un déplacement de l'issue de secours 5 d'une position démontée à la position montée de sorte à passer de la configuration d'éjection à la configuration de blocage lorsque la position montée est atteinte.

De cette manière, le mécanisme de blocage 15 est automatiquement disposé en configuration de blocage lors du montage de l'issue de secours 5.

Un deuxième rôle consiste, pour la butée d'actionnement 43, à coopérer avec l'élément de retenue 13 lors d'un passage de la configuration de blocage à la configuration d'éjection de sorte à entraîner un déplacement relatif de l'élément de retenue 13 selon la direction d'éjection 9.

Ainsi, l'éjection de l'issue de secours 5 est aidée par la butée d'actionnement 43 qui déplace l'élément de retenue 13 relativement au mécanisme de blocage 15.

Le mécanisme de blocage 15 comprend également un verrou 45 agencé pour coopérer la partie mobile 17 dans le but de maintenir la configuration de blocage. Le verrou 45 est alors en position verrouillée.

Le verrou 45 présente une surface d'entrainement 47 configurée pour coopérer avec la partie mobile 17 lors d'un passage de la position verrouillée à une position déverrouillée de sorte à faire passer la partie mobile 17 de la configuration de blocage à la configuration d'éjection.

Le mécanisme de blocage 15 comprend un rail 49 agencé pour guider le verrou 45 entre la position verrouillée et la position déverrouillée et inversement. Le verrou 45 est configuré pour être disposé dans une position intermédiaire entre la position déverrouillée et la position verrouillée.

La position intermédiaire est atteinte lors de la disposition de l'issue de secours 5 lors du passage de la position démontée à la position montée.

La position intermédiaire est visible aux figures 7 et 8. La position déverrouillée est celle de la figure 6. Lorsque le verrou 45 est disposé en fin de course du côté droit du rail 49 à la figure 8, il est en position verrouillée.

Comme également visible à la figure 8, la partie mobile 17 présente une avancée 51 agencée pour coopérer d'une part avec une surface de verrouillage 53 du verrou 45 en position verrouillée et avec la surface d'entrainement 47 lors du déverrouillage.

L'avancée 51 permet donc d'assurer deux fonctions : le verrouillage et le passage en configuration d'éjection.

Le verrou 45 présente une encoche 55 dans laquelle l'avancée 51 est insérée. La surface d'entrainement 47 et la surface de verrouillage 53 sont ménagées en regard l'une de l'autre de chaque côté de l'encoche 55.

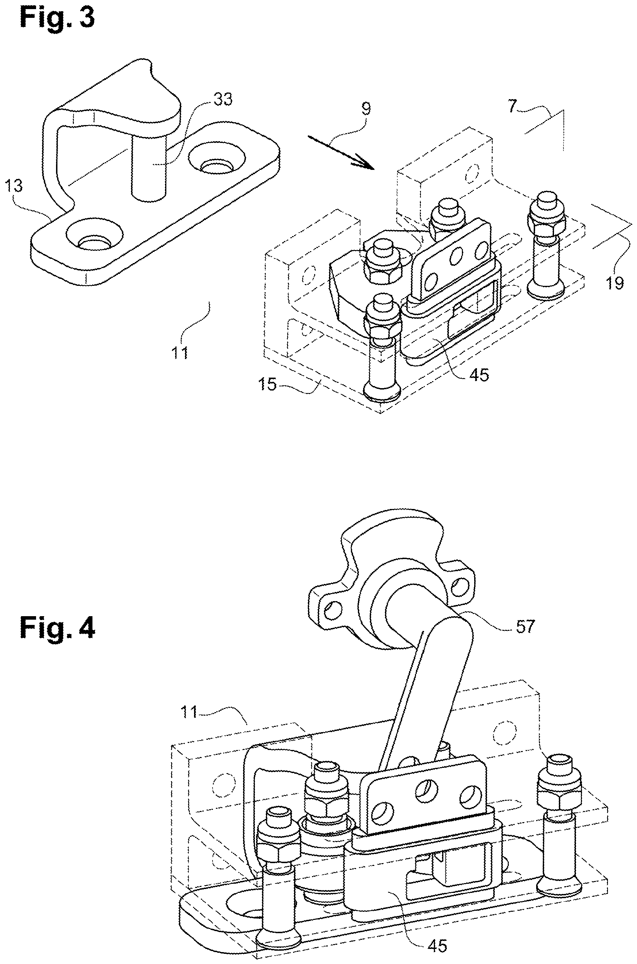

Comme illustré aux figures 4 et 5, le mécanisme de blocage 15 comprend un dispositif de verrouillage 57 agencé pour disposer le verrou 45 en position verrouillée. Le dispositif de verrouillage 57 est donc utilisé lors du montage de l'issue de secours 5 dans le cadre d'accueil 3.

Le dispositif de verrouillage 57 comprend un indicateur visuel 59 configuré pour signaler le bon positionnement du verrou 45 en position verrouillée. Le dispositif de verrouillage 57 comprend également un actionneur rotatif 61 configuré pour coopérer avec le verrou 45 et solidaire de l'indicateur visuel 59.

L'indicateur visuel 59 est ainsi fiable puisque sa position dépend de l'état de l'actionneur rotatif 61.

L'actionneur rotatif 61 comprend un emplacement d'accueil 63 pour un outil de configuré pour entraîner la rotation. L'emplacement d'accueil 63 correspond à une clé hexagonale.

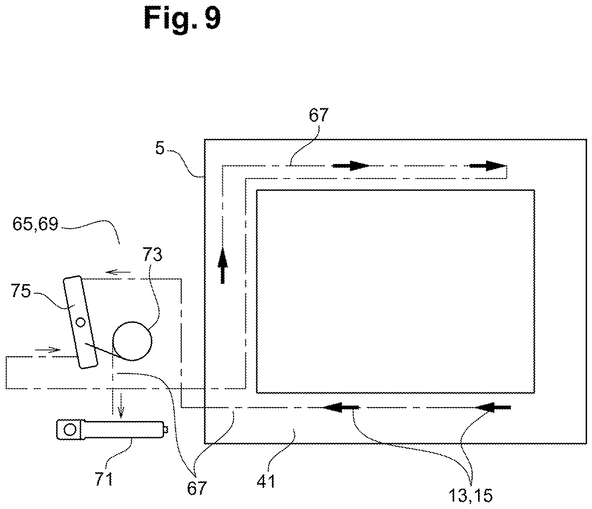

Comme illustré à la figure 9, le système d'éjection 11 comprend une pluralité d'éléments de retenue 13 et une pluralité de mécanismes de blocage 15 correspondants tels que décrits ci-dessus et répartis le long du rebord 41 de l'issue de secours 5.

Le système d'éjection 11 comprend en outre un dispositif de déclenchement 63 agencé pour réaliser le passage de la configuration de blocage à la configuration d'éjection de la pluralité de mécanismes de blocage 15.

Le dispositif de déclenchement 65 permet de disposer en une seule opération la pluralité de mécanismes de blocage 15 en configuration d'éjection.

Le dispositif de déclenchement 65 comprend des câbles 67, un mécanisme de mise sous tension 69 des câbles 67 agencé pour déclencher le passage de la configuration de blocage à la configuration d'éjection lors de la mise sous tension.

Le dispositif de déclenchement 65 comprend également au moins une poignée d'actionnement 71 qui peut être extérieure et/ou intérieure.

En d'autres termes, le déclenchement est mécanique, la mise sous tension correspondant au fait de tendre les câbles. Par câble, il est entendu un fil ou une corde apte à être tendue.

Le mécanisme de mise sous tension 69 comprend une poulie 73 configurée pour permettre la mise sous tension des câbles 67 lorsqu'un utilisateur tire sur la poignée d'actionnement 71.

Cette disposition permet de tirer la poignée d'actionnement 71 dans n'importe quelle direction car la poulie 73 permet tendre les câbles dans tous les cas de figure.

Le mécanisme de mise sous tension 69 comprend une pièce de liaison rotative 75 reliée à la poulie 73 de manière à permettre la tension d'au moins deux câbles 67, chacun des au moins deux câbles 67 étant relié à une extrémité de la pièce de liaison rotative 75.

Cette disposition permet de tendre les au moins deux câbles 67 en tirant dessus selon deux directions opposées. Le mécanisme de mise sous tension 69 permet ainsi de s'adapter à différents types de configurations spatiales entre les mécanismes de blocage 15.

Le système d'éjection 11 ainsi décrit permet la fixation de l'issue de secours 5 au cadre d'accueil 3. L'éjection est également facilitée puisqu'il suffit de tirer l'au moins une poignée d'actionnement 71 dans n'importe quelle direction.

Le fait que la partie mobile 17 soit agencée pour être mobile dans le plan de fermeture 19 permet de gagner de la place parallèlement à la surface de base 7 et ainsi de concevoir un système d'éjection 11 peu encombrent.

Il apparait bien que l'épaisseur du rebord 41 de l'issue de secours suffit pour loger le mécanisme de blocage.

Comme il va de soi, l'invention ne se limite pas à la seule forme d'exécution décrite ci-dessus à titre d'exemple, elle en embrasse au contraire toutes les variantes de réalisation dans la mesure où elles entrent dans le champ d'application des revendications annexées.

## Revendications

1. Système d'éjection (11) pour une issue de secours (5) d'un véhicule (1), l'issue de secours (5) s'étendant selon une surface de base (7) et étant agencée pour coopérer en une position montée avec un cadre d'accueil (3) du véhicule (1), le système d'éjection (11) comprenant un élément de retenue (13) et un mécanisme de blocage (15) agencé pour coopérer avec l'élément de retenue (13) selon :
- une configuration de blocage dans laquelle une partie mobile (17) du mécanisme de blocage (15) empêche un déplacement relatif de l'élément de retenue (13) et du mécanisme de blocage (15) selon une direction d'éjection (9) de l'issue de secours (5) qui est transversale à la surface de base (7), la partie mobile (17) étant configurée pour être déplacée dans un plan de fermeture (19) s'étendant transversalement à la surface de base (7) et
- une configuration d'éjection dans laquelle le mécanisme de blocage (15) est apte à se déplacer selon la direction d'éjection (9) par rapport à l'élément de retenue (13).

2. Système d'éjection (11) selon la revendication 1, dans lequel la partie mobile (17) comprend une mâchoire (21) configurée pour pivoter autour d'un axe de fermeture (23) qui est transversal au plan de fermeture (19).

3. Système d'éjection (11) selon l'une des revendications 1 ou 2, dans lequel la partie mobile (17) présente une butée d'actionnement (43) configurée pour coopérer avec l'élément de retenue (13) lors d'un déplacement de l'issue de secours (5) d'une position démontée à la position montée de sorte à passer de la configuration d'éjection à la configuration de blocage lorsque la position montée est atteinte.

4. Système d'éjection (11) selon la revendication 3, dans lequel la butée d'actionnement (43) est agencée pour coopérer avec l'élément de retenue (13) lors d'un passage de la configuration de blocage à la configuration d'éjection de sorte à entraîner un déplacement relatif de l'élément de retenue (13) selon la direction d'éjection (9).

5. Système d'éjection (11) selon l'une des revendications 1 à 4, dans lequel le mécanisme de blocage (15) comprend un verrou (45) configuré pour coopérer avec la partie mobile (17) en une position verrouillée dans laquelle la partie mobile (17) est maintenue en configuration de blocage.

6. Système d'éjection (11) selon la revendication 5, dans lequel le mécanisme de blocage (15) comprend un dispositif de verrouillage (57) agencé pour disposer le verrou (45) en position verrouillée lorsque le mécanisme de blocage (15) est en configuration de blocage.

7. Système d'éjection (11) selon la revendication 6, dans lequel le dispositif de verrouillage (57) comprend un indicateur visuel (59) configuré pour signaler le bon positionnement du verrou (45) en position verrouillée.

8. Système d'éjection (11) selon la revendication 7, dans lequel le dispositif de verrouillage (57) comprend un actionneur rotatif (61) configuré pour coopérer avec le verrou (45), l'actionneur rotatif (61) étant solidaire de l'indicateur visuel (59).

9. Système d'éjection (11) selon l'une des revendications 5 à 8, dans lequel le verrou (45) présente une surface d'entrainement (47) configurée pour coopérer avec la partie mobile (17) lors d'un passage de la position verrouillée à une position déverrouillée de sorte à faire passer la partie mobile (17) de la configuration de blocage à la configuration d'éjection.

10. Système d'éjection (11) selon l'une des revendications 1 à 9, dans lequel l'élément de retenue (13) est configuré pour être rapporté sur ou ménagé dans le cadre d'accueil (3) et dans lequel le mécanisme de blocage (15) est configuré pour être rapporté sur ou ménagé dans l'issue de secours (5).

11. Système d'éjection (11) selon l'une des revendications 1 à 10, comprenant une pluralité d'éléments de retenue (13) et une pluralité de mécanismes de blocage (15) correspondants, le système d'éjection (11) comprenant en outre un dispositif de déclenchement (65) agencé pour réaliser le passage de la configuration de blocage à la configuration d'éjection de la pluralité de mécanismes de blocage (15).

12. Système d'éjection (11) selon la revendication 11, dans lequel le dispositif de déclenchement (65) comprend un ou des câbles (67), un mécanisme de mise sous tension (69) du ou des câbles (67) agencé pour déclencher le passage de la configuration de blocage à la configuration d'éjection lors de la mise sous tension, et, au moins une poignée d'actionnement (71).

## Patentansprüche

1. Auswurfsystem (11) für einen Notausstieg (5) eines Fahrzeugs (1), wobei sich der Notausstieg (5) entlang einer Grundfläche (7) erstreckt und so angeordnet ist, dass er in einer montierten Position mit einem Aufnahmerahmen (3) des Fahrzeugs (1) zusammenwirkt, wobei das Auswurfsystem (11) ein Rückhalteelement (13) und einen Blockiermechanismus (15) umfasst, der so angeordnet ist, dass er mit dem Rückhalteelement (13) gemäß Folgendem zusammenwirkt:
- einer Blockierkonfiguration, bei der ein beweglicher Teil (17) des Blockiermechanismus (15) eine relative Verschiebung des Rückhalteelements (13) und des Blockiermechanismus (15) in einer Auswurfrichtung (9) des Notausstiegs (5), die quer zur Grundfläche (7) verläuft, verhindert, wobei der bewegliche Teil (17) so konfiguriert ist, dass er in einer sich quer zur Grundfläche (7) erstreckenden Verschlussebene (19) verschoben wird, und
- einer Auswurfkonfiguration, bei der der Blockiermechanismus (15) dazu geeignet ist, sich in der Auswurfrichtung (9) relativ zum Rückhalteelement (13) zu verschieben.

2. Auswurfsystem (11) nach Anspruch 1, wobei der bewegliche Teil (17) eine Backe (21) umfasst, die so konfiguriert ist, dass sie um eine Verschlussachse (23) schwenkt, die quer zur Verschlussebene (19) liegt.

3. Auswurfsystem (11) nach einem der Ansprüche 1 oder 2, wobei das bewegliche Teil (17) einen Betätigungsanschlag (43) aufweist, der so konfiguriert ist, dass er mit dem Rückhalteelement (13) zusammenwirkt, wenn eine Verschiebung des Notausgangs (5) aus einer demontierten Position in die montierte Position erfolgt, um bei Erreichen der montierten Position von der Auswurfkonfiguration in die Blockierkonfiguration zu wechseln.

4. Auswurfsystem (11) nach Anspruch 3, wobei der Betätigungsanschlag (43) so angeordnet ist, dass er bei einem Übergang von der Blockierkonfiguration in die Auswurfkonfiguration mit dem Rückhalteelement (13) zusammenwirkt, um eine relative Verschiebung des Rückhalteelements (13) in Auswurfrichtung (9) zu bewirken.

5. Auswurfsystem (11) nach einem der Ansprüche 1 bis 4, wobei der Blockiermechanismus (15) einen Riegel (45) umfasst, der so konfiguriert ist, dass er mit dem beweglichen Teil (17) in einer verriegelten Position zusammenwirkt, in der das bewegliche Teil (17) in der Blockierkonfiguration gehalten wird.

6. Auswurfsystem (11) nach Anspruch 5, wobei der Blockiermechanismus (15) eine Verriegelungsvorrichtung (57) umfasst, die so angeordnet ist, dass sie den Riegel (45) in der verriegelten Position hält, wenn sich der Blockiermechanismus (15) in der Blockierkonfiguration befindet.

7. Auswurfsystem (11) nach Anspruch 6, wobei die Verriegelungsvorrichtung (57) eine optische Anzeige (59) umfasst, die so konfiguriert ist, dass sie über die korrekte Positionierung des Riegels (45) in der verriegelten Position informiert.

8. Auswurfsystem (11) nach Anspruch 7, wobei die Verriegelungsvorrichtung (57) einen Drehbetätiger (61) umfasst, der so konfiguriert ist, dass er mit dem Riegel (45) zusammenwirkt, wobei der Drehbetätiger (61) an der optischen Anzeige (59) befestigt ist.

9. Auswurfsystem (11) nach einem der Ansprüche 5 bis 8, wobei der Riegel (45) eine Antriebsfläche (47) aufweist, die so konfiguriert ist, dass sie mit dem beweglichen Teil (17) während eines Wechsels von der verriegelten Position in eine entriegelte Position zusammenwirkt, um den beweglichen Teil (17) von der Blockierkonfiguration in die Auswurfkonfiguration wechseln zu lassen.

10. Auswurfsystem (11) nach einem der Ansprüche 1 bis 9, wobei das Rückhalteelement (13) so konfiguriert ist, dass es am Aufnahmerahmen (3) befestigt oder in diesem ausgebildet ist, und wobei der Blockiermechanismus (15) so konfiguriert ist, dass er am Notausstieg (5) befestigt oder in diesem ausgebildet ist.

11. Auswurfsystem (11) nach einem der Ansprüche 1 bis 10, umfassend eine Vielzahl von Rückhalteelementen (13) und eine Vielzahl von entsprechenden Blockiermechanismen (15), wobei das Auswurfsystem (11) ferner eine Auslösevorrichtung (65) umfasst, die so angeordnet ist, dass sie den Wechsel von der Blockierkonfiguration in die Auswurfkonfiguration der Vielzahl von Blockiermechanismen (15) durchführt.

12. Auswurfsystem (11) nach Anspruch 11, wobei die Auslösevorrichtung (65) ein oder mehrere Kabel (67), einen Spannmechanismus (69) für das oder die Kabel (67), der so angeordnet ist, dass er bei Aktivierung den Wechsel von der Blockierkonfiguration in die Auswurfkonfiguration auslöst, und mindestens einen Betätigungsgriff (71) umfasst.

## Claims

1. An ejection system (11) for an emergency exit (5) of a vehicle (1), the emergency exit (5) extending along a base surface (7) and being arranged to cooperate in a mounted position with a receiving frame (3) of the vehicle (1), the ejection system (11) comprising a retaining element (13) and a blocking mechanism (15) arranged to cooperate with the retaining element (13) according to:
- a blocking configuration in which a movable portion (17) of the blocking mechanism (15) prevents a relative displacement of the retaining element (13) and of the blocking mechanism (15) in an ejection direction (9) of the emergency exit (5) which is transverse to the base surface (7), the movable portion (17) being configured to be displaced in a closure plane (19) extending transversely to the base surface (7) and
- an ejection configuration in which the blocking mechanism (15) is capable of moving in the ejection direction relative to the retaining element (13).

2. The ejection system (11) according to claim 1, wherein the movable portion (17) comprises a jaw (21) configured to pivot about a closure axis (23) which is transverse to the closure plane (19).

3. The ejection system (11) according to any of claims 1 or 2, wherein the movable portion (17) has an actuation stop (43) configured to cooperate with the retaining element (13) during a displacement of the emergency exit (5) from a dismounted position to the mounted position, so as to switch from the ejection configuration to the blocking configuration when the mounted position is reached.

4. The ejection system (11) according to claim 3, wherein the actuation stop (43) is arranged to cooperate with the retaining element (13) during a switch from the blocking configuration to the ejection configuration so as to cause a relative displacement of the retaining element (13) in the ejection direction.

5. The ejection system (11) according to any of claims 1 to 4, wherein the blocking mechanism (15) comprises a lock (45) configured to cooperate with the movable portion (17) in a locked position in which the movable portion (17) is held in the blocking configuration.

6. The ejection system (11) according to claim 5, wherein the blocking mechanism (15) comprises a locking device (57) arranged to place the lock (45) in the locked position when the blocking mechanism (15) is in the blocking configuration.

7. The ejection system (11) according to claim 6, wherein the locking device (57) comprises a visual indicator (59) configured to report the proper positioning of the lock (45) in the locked position.

8. The ejection system (11) according to claim 7, wherein the locking device (57) comprises a rotary actuator (61) configured to cooperate with the lock (45), the rotary actuator (61) being secured to the visual indicator (59).

9. The ejection system (11) according to any of claims 5 to 8, wherein the lock (45) has a drive surface (47) configured to cooperate with the movable portion (17) during a switch from the locked position to an unlocked position so as to make the movable portion (17) switch from the blocking configuration to the ejection configuration.

10. The ejection system (11) according to any of claims 1 to 9, wherein the retaining element (13) is configured to be attached on or formed in the receiving frame (3) and wherein the blocking mechanism (15) is configured to be attached on or formed in the emergency exit (5).

11. The ejection system (11) according to any of claims 1 to 10, comprising a plurality of retaining elements (13) and a plurality of corresponding blocking mechanisms (15), the ejection system (11) further comprising a triggering device (65) arranged to carry out the switch from the blocking configuration to the ejection configuration of the plurality of blocking mechanisms (15).

12. The ejection system (11) according to claim 11, wherein the triggering device (65) comprises one or several cables (67), a mechanism (69) for tensioning the cable(s) arranged to trigger the switch from the blocking configuration to the ejection configuration upon tensioning, and, at least one actuation handle (71).
